# EUROPEAN PATENT APPLICATION

(11) **EP 4 635 876 A1**
(43) Date of publication of application: **22.10.2025**
(21) Application number: 25171081.0
(22) Date of filing: 16.04.2025
(51) Int. Cl.: B65D 88/12, B65D 88/52, B65D 90/00, B65D 90/02

(54) **INTERMODAL CONTAINER**

(30) Priority: 18.04.2024 PL 44833624
(71) Applicant: Ecco Rail Spolka z Ograniczona Odpowiedzialnoscia, 40-101 Katowice (PL)
(72) Inventor: Duda, Kamil, 52-200 Wysoka (PL)
(74) Representative: Patpol Kancelaria Patentowa Sp. z o.o.

(57) **Abstract**

The subject of the invention is an intermodal container comprising a floor frame (6), front and rear walls (7) and openable side walls (8). The container is characterised by the fact that on the floor frame (6) there are seats (3) for mounting the intermodal pallets equipped with catches (4) and, in addition, at the sides of the floor frame (6) there are folding stanchions (5).

## Description

The subject of the invention is an intermodal container comprising a floor frame, front and rear walls and openable side walls.

Containers and platforms of various types are commonly used to transport and store high-volume products. Sometimes such containers or platforms have to be specially prepared for the transport of certain products, or a special type of container or platform is used. Such products are heavy materials in the form of oblong elements, such as tubes, rods, rolls or bales, such as rolls of steel sheet. Most often, this type of material is transported on prefabricated mobile platforms that have permanently installed structures to fix and secure them against movement. These can be platforms with wedges for placing rolls or bales, or stanchions placed at the sides to place pipes, bars, beams, etc. between them. However, such solutions are cumbersome if the goods are transported in stages, as handling requires a special type of crane or hoist grips and, in addition, this type of platform is only used to carry a specific, single type of material. The state of the art includes, for example, an open rail platform with fixed cradle for steel bales, and a road transport semi-trailer equipped with fixed bale cradle in the floor of the semi-trailer. Railway platforms with fixed stanchions at the sides are also known, for carrying pipes, rods, beams, etc. Such solutions, as already mentioned, are cumbersome to handle and designed to carry only one type of goods.

There is also a well-known rail platform equipped with ISO 1161 corners for attaching a container or pallets with cradle for steel bales on it. The handling of goods to/from this platform is possible using a Reach Stacker or a forklift. This platform is slightly more versatile but does not allow securing of longitudinal elements such as pipes or rods.

Intermodal containers and containers for the transport of goods are also known to include a floor, front, rear and side walls. They can also be closed from the top (but not necessarily). These types of containers are equipped with ISO 1161 corners for attaching them to the Reach Stacker, making them easy to handle at the loading bay. Such containers are used to transport a variety of products, but they must also be specially adapted to specific types of products to prevent sliding, etc.

The intermodal container according to the invention solves problems from the state of the art.

The subject of the invention is an intermodal container comprising a floor frame, front and rear walls and openable side walls. The container is characterised by the fact that there are seats on the floor frame for mounting intermodal pallets, fitted with catches, and in addition there are folding stanchions at the sides of the floor frame.

Preferably, the container is equipped with ISO 1161 corners.

Preferably, the catches are TwistLock catches.

Preferably, the floor frame is formed from closed metal sections, I-beams and bent sections.

Preferably, the front and rear walls are made of sheet metal.

Preferably, the front and rear walls are raised roller shutters.

Preferably, the side walls are a system of sliding elements with a tarpaulin. Preferably, the floor frame is equipped with C-sections that receive the stanchions when folded.

Preferably, the stanchions are placed in each seat between the catches.

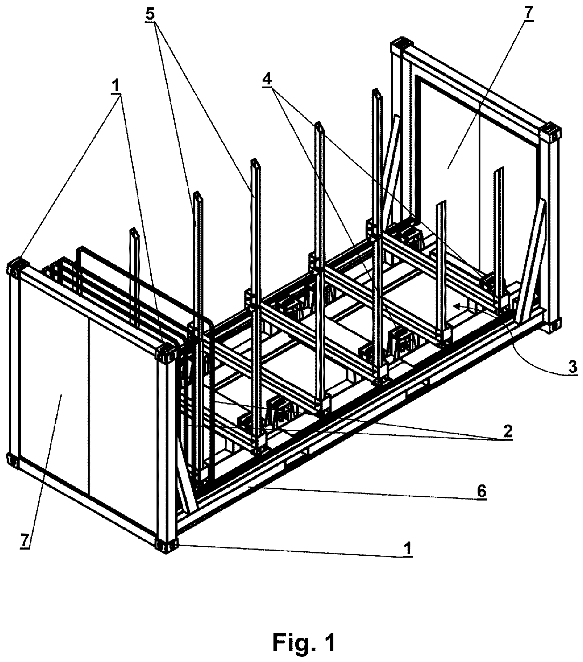

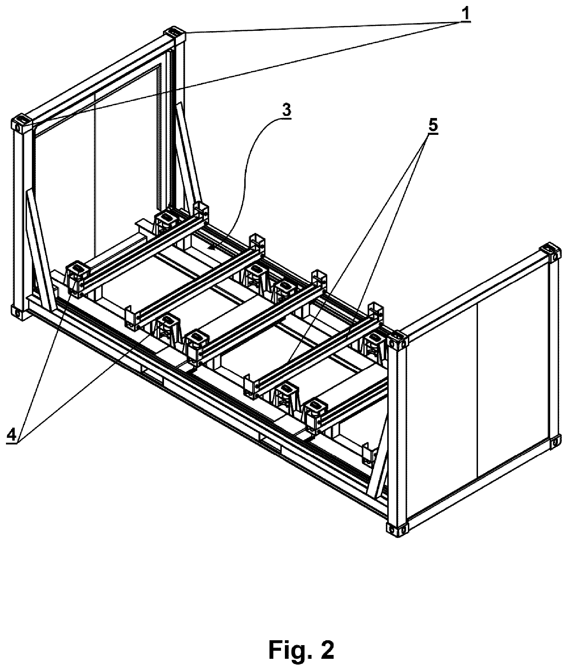

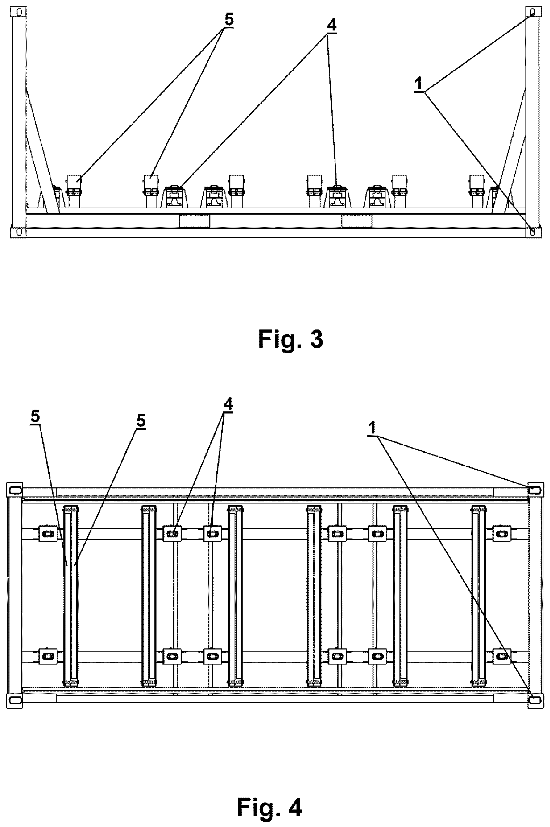

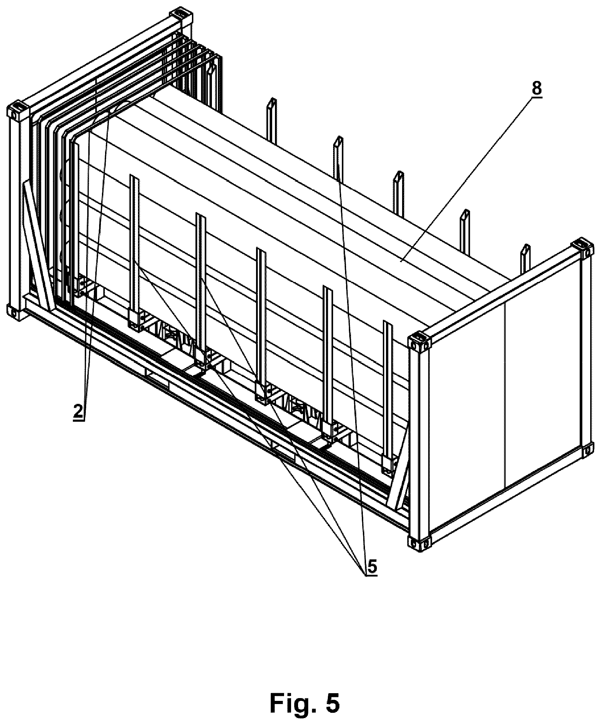

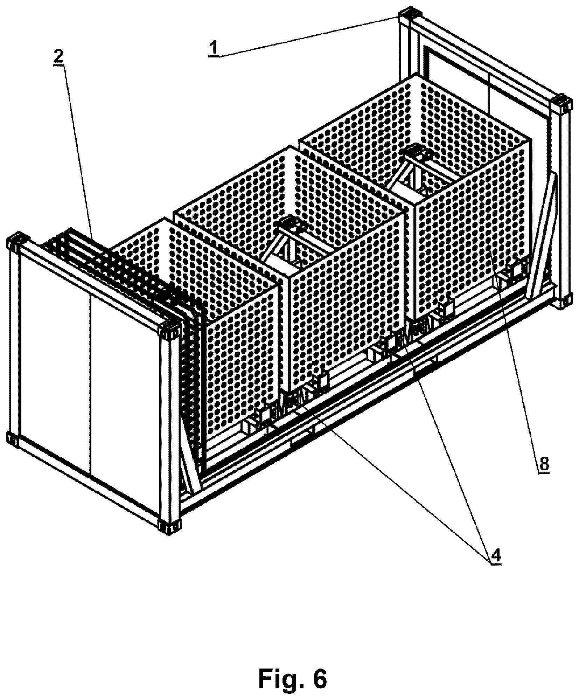

The subject of the invention is explained in the embodiments in the drawing, in which fig. 1 and fig. 2 show a perspective view of the container according to the invention with the stanchions unfolded and folded respectively, fig. 3 and fig. 4 show a side and top view, respectively, of the container with the stanchions folded, while fig. 5 and fig. 6 show a container with an exemplary load, where respectively in fig. 5 the stanchions are unfolded and there is cargo in the container in the form of oblong elements (such as pipes), whereas in fig. 6 stanchions are folded and smaller box loads are secured in the container seats.

As can best be seen in fig. 1, the intermodal container comprises a floor frame 6, front and rear walls 7 and openable side walls, here in the form of sliding elements 2 with a tarpaulin (the tarpaulin is not shown, in some figures the sliding elements 2 are also not shown for simplicity of drawing). On the floor frame 6 there are seats 3 for mounting intermodal pallets, fitted with catches4 and, in addition, there are folding stanchions 5 at the sides of the floor frame 6.

In the example shown in the figures, the floor frame 6 is formed of closed metal sections, I-beams and bent sections. The detailed configuration of the floor frame, i.e. the arrangement of sections etc., may vary, depending on the application, as will be obvious to a person skilled in the art. The front and rear walls 7 in the embodiment shown are made of sheet metal, but other materials suitable for this purpose can also be used. In the embodiment not shown in the figures, the front and rear walls 7 can be raised roller shutters, for easier access to the load.

In the embodiment shown, the catches4 in seats 3 for mounting the intermodal pallets are TwistLock catches, but these can be replaced by other catches if it is necessary to use the container for other cargo securing systems than standard. In this embodiment, the container is additionally equipped with ISO 1161 corners placed on all corners. As mentioned earlier in the embodiment shown, the side walls are a system of sliding elements 2 with a tarpaulin, but these can be absent or other types of walls can be used - removable solid sheet metal walls, lifting curtains, etc. The sliding elements 2 can be slid in both directions, i.e. towards both the front and rear wall 7.

The floor frame 6 is, in this example, additionally equipped with C-sections (not shown) that receive the stanchions 5 when folded. The stanchions 5, on the other hand, are located in each seat3 between the catches4. However, a different arrangement of stanchions is possible, there may be more stanchions, for example, or they may be arranged differently.

The container according to the invention allows transporting by rail as well as by road, due to the fact that it can be transferred, together with its load 8, between the usual transport platforms. The container can be lifted with a forklift truck and, when fitted with ISO 1161 corners at the corners, also with a Reach Stacker. The container may have one or more (preferably three) sockets 3 (an example with three sockets is shown in the figures) for fixing pallets or containers, the sockets 3 being fitted with standard catches4, preferably of the Twist Lock type. Pallets or smaller containers with the load 8 can be caught into the container, for transporting different types of products - as required. Hooks 4 prevent the load 8 from moving. An example of catching the load 8 in smaller containers is shown in fig. 6 The stanchions 5 in this situation are folded up and hidden under the caught containers. Ideally, they are stowed in C-profiles to prevent accidental damage - especially if the products being transported are very heavy. This solution further strengthens the load 8 support and stiffens the floor frame 6. When longitudinal components such as pipes or rods are transported, the stanchions are unfolded and these components are stacked along the container between the stanchions 5. An example of this type of load is shown in fig. 5. Fig. 1 shows an unloaded container with stanchions 5 unfolded, while fig. 2 shows the same unloaded container with stanchions 5 folded.

The container according to the invention additionally allows storage by stacking the containers one on top of the other. In this case, the corners of the floor in the form of ISO 1161 corners of the higher container are seated on the corners of the top in the form of ISO 1161 corners of the lower container. A standard Bridge Fitting buckle is used for fastening.

Of course, the invention is not limited to the embodiments described above, and the features indicated in the claims can be combined in any combination appropriate to the particular application of the solution.

## Claims

1. An intermodal container comprising a floor frame (6), front and rear walls (7) and openable side walls, **characterised in that** the floor frame (6) has seats (3) for mounting intermodal pallets, fitted with catches (4) and, in addition, folding stanchions (5) are provided at the sides of the floor frame (6).

2. The container according to claim 1, **characterised in that** it is equipped with ISO 1161 corners (1).

3. The container according to claim 1, **characterised in that** the catches (4) are of the TwistLock type.

4. The container according to claim 1, **characterised in that** the floor frame (6) is formed from closed metal sections, I-beams and bent sections.

5. The container according to claim 1, **characterised in that** the front and rear walls (7) are made of sheet metal.

6. The container according to claim 1, **characterised in that** the front and rear walls (7) are raised roller shutters.

7. The container according to claim 1, **characterised in that** the side walls are a system of sliding elements (2) with a tarpaulin.

8. The container according to claim 1, **characterised in that** the floor frame (6) is provided with C-sections that receive the stanchions (5) when folded.

9. The container according to claim 1, **characterised in that** the stanchions (5) are arranged in each socket (3) between the catches (4).
